# EUROPEAN PATENT APPLICATION

(11) **EP 2 610 485 A2**
(43) Date of publication of application: **03.07.2013**
(21) Application number: 12161755.9
(22) Date of filing: 28.03.2012
(51) Int. Cl.: F03D 7/02

(54) **Wind turbine system**

(30) Priority: 28.12.2011 TW 100149274
(71) Applicant: Industrial Technology Research Institute, Chutung Hsinchu 31040 (TW)
(72) Inventor: Guey, Zen-Jey, Hsinchu City 300 (TW); Chang, Yun-Yuan, Taipei City 104 (TW)
(74) Representative: Becker Kurig Straus

(57) **Abstract**

A wind turbine system includes a nacelle, a generator, a central control module, an impeller, a transmission module, a speed sensor module, a pitch angle driving module, a hub controller and a slip-ring apparatus. The hub controller receives a first pitch command from the central control module or generates a second pitch command according to a rotation speed of a hub sensed by the speed sensor module. If the first pitch command is correctly transmitted, the hub controller transmits the first pitch command to the pitch angle driving module. If not, the hub controller transmits the second pitch command to the pitch angle driving module. The pitch angle driving module controls a pitch angle of at least one blade after receiving the pitch command, so that the wind turbine system works. Therefore, the wind turbine system has a distributed control function and a redundancy capability.

## Description

### BACKGROUND OF THE DISCLOSURE

### Field of the Disclosure

The disclosure relates to a wind turbine system. Particularly, the disclosure relates to a wind turbine system having a distributed control function and a redundancy capability.

### Description of Related Art

In recent years, in order to achieve purposes of carbon reduction and energy independence, the use of renewable energy has become a focus of concern, and wind power is one of the renewable energies. Comparing contents of wind resources, the wind resource on the sea is rich, and the wind resource on land is becoming less and has more usage limitations. Therefore, many industrialized coastal countries have heavily invested to develop offshore wind energy. Besides construction of large offshore wind turbines, the large wind turbines are continually researched and developed.

There are two main means for controlling the operation of a large wind turbine, which are respectively adjustment of a speed of the generator and adjustment of a blade angle. The former adjustment is used to track an optimal power of the wind energy below a rated wind speed, and the latter adjustment is used to limit the power production of the wind energy above the rated wind speed. Moreover, adjustment of the blade angle includes active stall and pitch regulation, etc., where regarding a control method of the pitch regulation, a pitch angle of a blade can be adjusted according to the wind speed, and in collaboration with a variable speed turbine, a wind control system thereof may have a highest controllability, which has been widely applied in the large wind turbines, and such type of wind turbines are also referred to as variable-speed pitch-regulated (VSPR) wind turbines.

When the large wind turbine operates, the blades and a hub are all rotated. When the large wind turbine works, after a central controller performs calculations for a speed control and a pitch control, a converter command and a pitch command are generated, and are respectively output to a power converter and a hub controller to adjust the speed and the pitch angle. Since the central controller and the power converter can be disposed in a nacelle or other stationary places on site, signal transmission there between is not difficult. Comparatively, the hub controller is disposed in the hub, and the hub and the nacelle are directly or indirectly coupled. When the wind turbine operates, the signal transmission between the rotated hub and the nacelle cannot be coupled through a fixed wire. Therefore, a slip-ring apparatus can be disposed between the nacelle and the hub and the pitch command and the associated status signals can be transmitted between the rotated hub and the fixed nacelle. When the hub controller receives the pitch command and transmits it to a pitch control system, the pitch control system can control the blade to rotate to a specified angle.

According to the currently available design or prior art, the pitch command transmitted to the pitch control system by the hub controller only come from the central controller, namely, the hub controller can only transmit the pitch command, and cannot generate the pitch command by itself. Moreover, the slip-ring apparatus that plays an important role in connection between the central controller and the hub controller can be damaged in the contact part due to wearing or contamination of physical environment, and now the hub controller cannot operate as it cannot receive the pitch command from the central controller. Moreover, many of the large wind turbines are disposed at offshore areas, and once an operation failure occurs, it is uneasy or has a high cost to transport human and spare parts for maintenance, which may delay a repair opportunity.

### SUMMARY

The disclosure is directed to a wind turbine system, in which a wind turbine has independent operation function a redundant function.

The disclosure provides a wind turbine system including a nacelle, a generator, a central control module, an impeller, a transmission module, a speed sensor module, at least one pitch angle driving module and a hub controller. The generator is disposed in the nacelle. The central control module is also disposed in the nacelle for receiving a first speed signal of the generator, and outputting a corresponding first pitch command. The impeller has a hub and at least one blade connected to the hub. Each blade is connected to one or plural of the one pitch angle driving module. The transmission module is connected between the generator and the impeller. The speed sensor module in the hub is for sensing a rotation speed of the hub and outputting a corresponding second speed signal. The hub controller is disposed in the hub, and is coupled to the speed sensor module in the hub and the pitch angle driving module. The hub controller receives the first pitch command, and determines whether the first pitch command is correctly transmitted according to the communication protocol, where when the first pitch command is correctly transmitted , the hub controller transmits the first pitch command to the pitch angle driving module, and the pitch angle driving module controls a pitch angle of the at least one blade, and when the first pitch command is incorrectly transmitted, the hub controller calculates a second pitch command according to the second speed signal and transmits the second pitch command to the pitch angle driving module, and the pitch angle driving module controls the pitch angle of the at least one blade.

According to the above descriptions, in the wind turbine system of the disclosure, the hub controller determines whether the received first pitch command is correctly transmitted according to the communication protocol, and the speed sensor module in the hub is used to sense a rotation speed of the hub to output the second speed signal. When the hub controller determines that the first pitch command is correctly transmitted according to the communication protocol, the hub controller transmits the first pitch command to the pitch angle driving module. When the hub controller determines that the first pitch command is incorrectly transmitted, the hub controller calculates the second pitch command according to the second speed signal and transmits the second pitch command to the pitch angle driving module. In this way, regardless of whether the first pitch command output by the central controller can be transmitted to the hub controller through the slip-ring apparatus, the hub controller can transmits a pitch command to the pitch angle driving module, and the pitch angle driving module can control the pitch angle of the at least one blade, namely, the hub controller can operate independently and generate the pitch command, so that the wind turbine system has a distributed control function and a redundancy capability.

In order to make the aforementioned and other features and advantages of the disclosure comprehensible, several exemplary embodiments accompanied with figures are described in detail below.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

FIG. 1 is a schematic diagram of a wind turbine system according to an embodiment of the disclosure.

FIG. 2 is a schematic diagram of a slip-ring apparatus of the wind turbine system of FIG. 1.

FIG. 3 is an exploded view of an impeller of FIG. 1.

FIG. 4 is a block diagram of the wind turbine system of FIG. 1.

FIG. 5 is a schematic diagram of a central control module of the wind turbine system of FIG. 1.

FIG. 6 is a schematic diagram of a transmission method of a first pitch command of the wind turbine system of FIG. 1.

FIG. 7 is a schematic diagram of pitch control mechanisms of the wind turbine system of FIG. 1.

FIG. 8 is a schematic diagram of a transmission method of a second pitch command of the wind turbine system of FIG. 1.

FIG. 9 is a schematic diagram of a speed sensor module in the hub of the wind turbine system of FIG. 1.

FIG. 10 is a schematic diagram of a speed sensor module in the hub of the wind turbine system according to another embodiment of the disclosure.

FIG. 11 is a schematic diagram of a pitch angle driving module of the wind turbine system of FIG. 1.

FIG. 12 illustrates a transmission flow of speed signals and pitch signals of the wind turbine system of FIG. 1.

### DETAILED DESCRIPTION OF DISCLOSED EMBODIMENTS

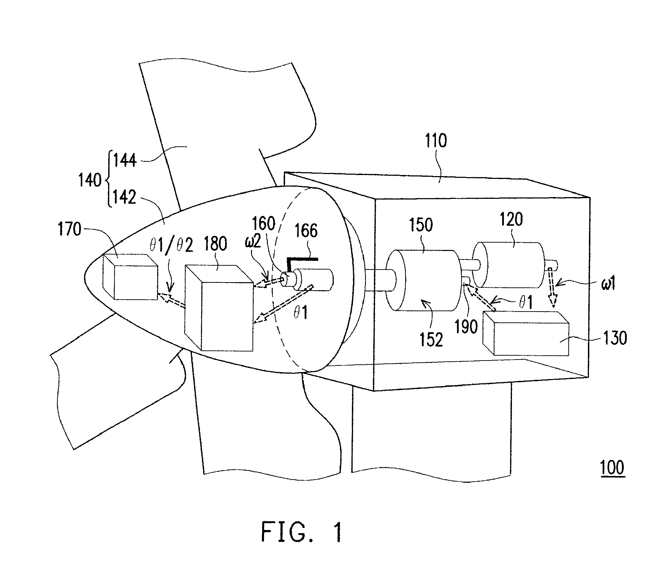

FIG. 1 is a schematic diagram of a wind turbine system according to an embodiment of the disclosure. The wind turbine system 100 of the present embodiment includes a nacelle 110, a generator 120, a central control module 130, an impeller 140, a transmission module 150, a speed sensor module 160 , at least one pitch angle driving module 170, a hub controller 180 and a slip-ring apparatus 190. The generator 120, the central control module 130 and the transmission module 150 are disposed in the nacelle 110. The impeller 140 has a hub 142 and a plurality of blades 144 connected to the hub 142. In the present embodiment, the number of the blades 144 is three (the blades 144a, 144b and 144c). The transmission module 150 includes a gearbox 152, which is connected between the generator 120 and the impeller 140 in a direct or indirect manner. In the present embodiment, the gearbox 152 can be a speed-changing gearbox, which has a speed ratio, so that there is a specific ratio between a rotation speed of the generator 120 and a rotation speed of the impeller 140. When the wind turbine system 100 operates, the impeller 140 presents a rotation state, and drives the generator 120 through the transmission module 150 to generate power.

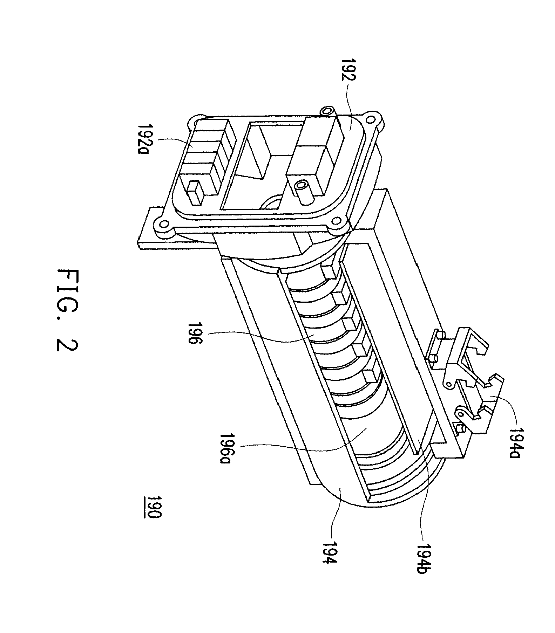

Moreover, FIG. 2 is a schematic diagram of the slip-ring apparatus 190 of the embodiment. In order to ensure a normal data and power signal transmission between the hub controller 180 disposed in the hub 140 and the central control module 130 disposed in the nacelle 110, in the present embodiment, the slip-ring apparatus 190 is used to couple the hub 142 of the impeller 140 and the nacelle 110. A rotation end 192 of the slip-ring apparatus 190 is rotating directly with the hub 142 via the link of the transmission module 150, and a connector 192a is disposed on the rotation end 192 for electrically connecting the hub controller 180. Moreover, a fixing end 194 of the slip-ring apparatus 190 is fixed in the nacelle 110, and a connector 194a is disposed on the fixing end 194 for electrically connecting the central control module 130. A rotation shaft 196 connected to the rotation end 192 is disposed in the fixing end 194, which can rotate relative to the fixing end 194. The fixing end 194 has brushes 194b for contacting a conductive ring 196a on the rotation shaft 196 in order to transmit data and power signals. The connector 192a of the rotation end 192 is electrically connected to the conductive ring 196a, and the connector 194a of the fixing end 194 is electrically connected to the brushes 194b. In this way, when the impeller 140 rotates, the data and power signals can be transmitted between the hub controller 180 and the central control module 130 through the slip-ring apparatus 190.

When the wind turbine system operates, the central control module 130 performs calculations for a speed control and a pitch angle control, and drives the pitch angle driving module 170 through the hub controller 180, so as to adjust pitch angles of the blades 144a-144c.

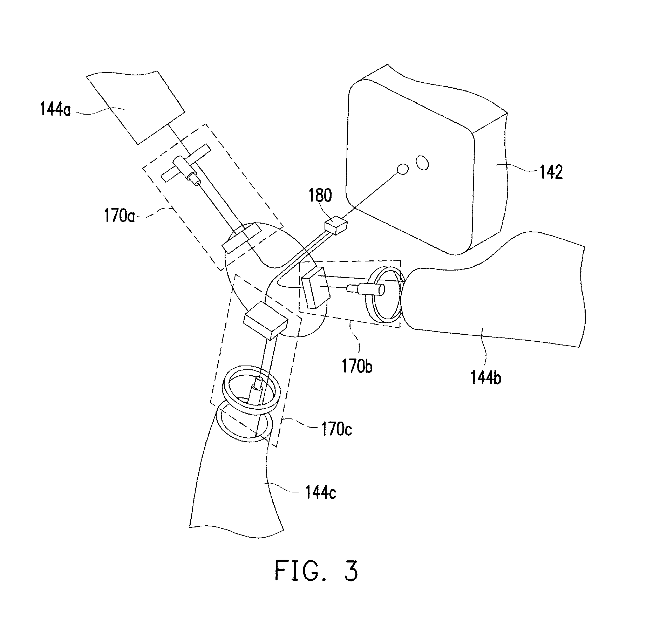

FIG. 3 is an exploded view of the impeller of FIG. 1. As shown in FIG. 3, a plurality of pitch angle driving modules can be configured according to the number of the blades, for example, the pitch angle driving modules 170a-170c respectively connected to the blades 144a-144c, which can receive the pitch commands from the hub controller 180 to respectively drive the corresponding blades 144a-144c. Although three sets of the blades 144a-144c and the pitch angle driving modules 170a-170c are taken as an example for descriptions, the number and configuration of the blade 144 and the pitch angle driving module 170 are not limited by the disclosure. In other embodiments of the disclosure, the wind turbine system can use one or a plurality of pitch angle driving module to drive one blade.

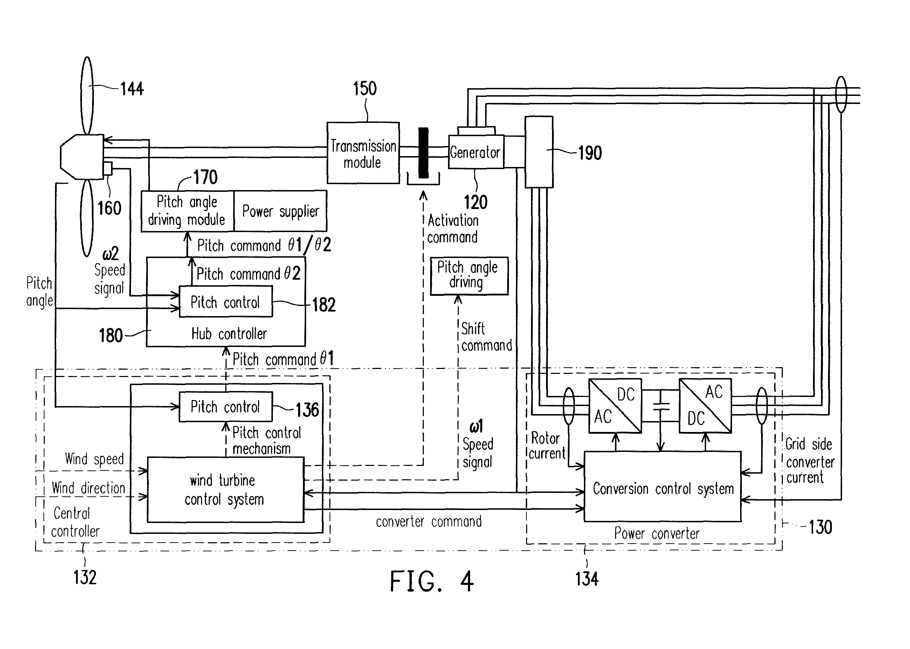

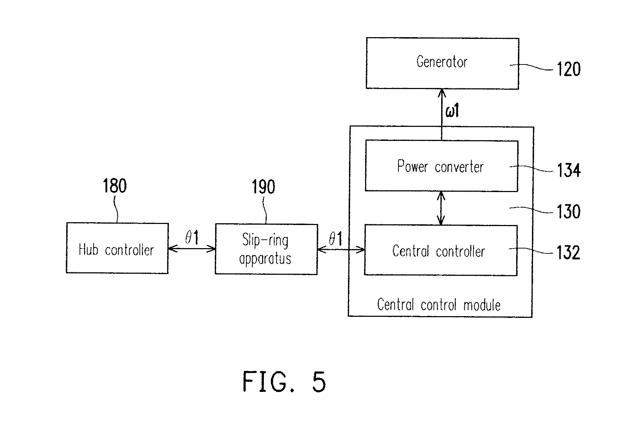

FIG. 4 is a block diagram of the wind turbine system of FIG. 1. FIG. 5 is a schematic diagram of the central control module of the wind turbine system of FIG. 1. Referring to FIG. 1, FIG. 4 and FIG. 5, when the wind turbine system 100 normally operates, the central control module 130 disposed in the nacelle 110 receives a first speed signal ω1 from the generator 120. The wind turbine system 100 can limit a power of the wind energy by adjusting a pitch angle of the blade 144, and a detailed pitch adjusting method is to build a pitch control mechanisms 136 as a software embedded in the central control module 130 for receiving the speed signal and calculating a corresponding pitch command. The central control module 130 is disposed in the nacelle 110, and includes a central controller 132 and a power converter 134, where the power converter 134 is coupled between the generator 120 and the central controller 132. Referring to FIG. 4 and FIG. 5, after the central controller 132 receives the first speed signal ω1, the pitch control mechanism 136 in the central controller 132 calculates a first pitch command θ1, and transmits the first pitch command θ1 to the hub controller 180 disposed in the rotated impeller 140 through the slip-ring apparatus 190. Moreover, the central controller 132 also transmits a converter command to the power converter 134.

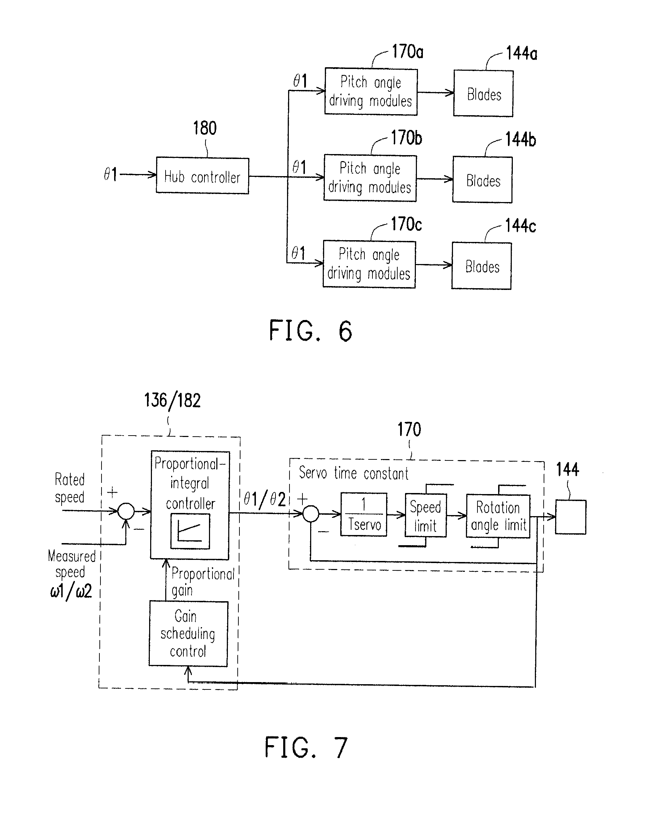

FIG. 6 is a schematic diagram of a transmission method of the first pitch command of the wind turbine system of FIG. 1. As described above, after the central controller 132 transmits the first pitch command θ1 to the hub controller 180 through the slip-ring apparatus 190, the hub controller 180 determines whether the first pitch command θ1 is correctly transmitted according to the communication protocol. When the first pitch command θ1 is correctly transmitted , the hub controller 180 transmits the first pitch command θ1 to the pitch angle driving modules 170a-170c to respectively control the pitch angles of the corresponding blades 144a-144c.

However, when the first pitch command θ1 is incorrectly transmitted, it represents that the central control module 130 that outputs the pitch command or the slip-ring apparatus 190 that transmits the pitch command has a problem. Therefore, in the present embodiment, the speed sensor module 160 is disposed in the hub 142, and is fixed on the hub 142 through a fixing rack 166, as that shown in FIG. 1, which is used to sense a rotation speed of the hub 142 and output a corresponding second speed signal ω2 to the hub controller 180. The speed sensor module 160 senses the rotation speed of the hub 142 and outputs the second speed signal ω2, where the second speed signal ω2 is proportional to the first speed signal ω1. As described above, configuration of the gearbox 152 results in a specific ratio between the rotation speed of the generator 120 and the rotation speed of the impeller 140. Since the hub 142 is disposed at the side of the impeller 140, a rotation speed of the hub 142 is regarded to be equivalent to the rotation speed of the impeller 140. In this way, the second speed signal ω2 obtained by the speed sensor module 160 by sensing the rotation speed of the hub 142 is also proportional to the first speed signal ω1 transmitted by the generator 120.

After the hub controller 180 receives the second speed signal ω2 from the speed sensor module 160 in the hub 142, the hub controller 180 calculates to output a corresponding pitch command to replace the first pitch command θ1, so that the hub controller 180 can operate independently and has a redundancy capability. Detailed implementations thereof are sequentially described below.

In detail, referring to FIG. 4, after the hub controller 180 receives the second speed signal ω2, a pitch control mechanism 182 built in the hub controller 180 calculates a second pitch command θ2 corresponding to the second speed signal ω2. The pitch control mechanism 182 can be directly implemented by the pitch control mechanism 136 in the central control module 130. The calculated second pitch command θ2 obtained by inputting the second speed signal ω2 to the pitch control mechanism 182 in a proportional relationship can be regarded to be equivalent to the first pitch command θ1. In this way, when the first pitch command θ1 is incorrectly transmitted, the second pitch command θ2 is used to replace the first pitch command θ1, and is transmitted to each of the pitch angle driving modules 170 through the hub controller 180, such that each of the pitch angle driving modules 170 can control a pitch angle of the corresponding blade 144. Therefore, the hub controller 180 can operate independently and has the redundancy capability.

A method for the pitch control mechanisms 136 and 182 transmitting signals is described below with reference of FIG. 7. FIG. 7 is a schematic diagram of the pitch control mechanisms of the wind turbine system of FIG. 1. The pitch control mechanism 136/182 operates in response to a rated speed signal and a measured speed signal, where the rated speed signal has a fixed setting value, and the measured speed signal is obtained by measuring an actual rotation speed. The pitch control mechanism 136/182 transmits an error between the rated speed signal and the measured speed signal to a proportional-integral (PI) controller, which then calculates and outputs a reference pitch angle to each of the pitch angle driving modules 170.

In detail, when the pitch control mechanism 136 is built in the central control module 130, the pitch control mechanism 136 processes a rated speed signal with a fixed setting value and a measured speed signal obtained by measuring an actual rotation speed of the generator 120, where the measured speed signal is the first speed signal ω1. The pitch control mechanism 136 transmits an error between the rated speed signal and the first speed signal ω1 to the PI controller, which then calculates and outputs the first pitch command θ1 to each of the pitch angle driving modules 170 through the slip-ring apparatus 190.

Comparatively, when the pitch control mechanism 182 is built as a software embedded in the hub controller 180, the pitch control mechanism 182 processes a rated speed signal with a fixed setting value and a measured speed signal obtained by the speed sensor module 160 in the hub 142 by measuring an actual rotation speed of the hub 142, where the measured speed signal is the second speed signal ω2. The pitch control mechanism 182 transmits an error between the rated speed signal and the second speed signal ω2 to the PI controller, which then calculates and outputs the second pitch command θ2 to each of the pitch angle driving modules 170.

Therefore, by respectively building the pitch control mechanisms 136 and 182 in the central control module 130 and the hub controller 180, the central control module 130 and the hub controller 180 can calculate the corresponding pitch command according to the rated speed signal and the measured speed signal for transmitting to each of the pitch angle driving modules 170, so that the wind turbine system 100 has the distributed control function.

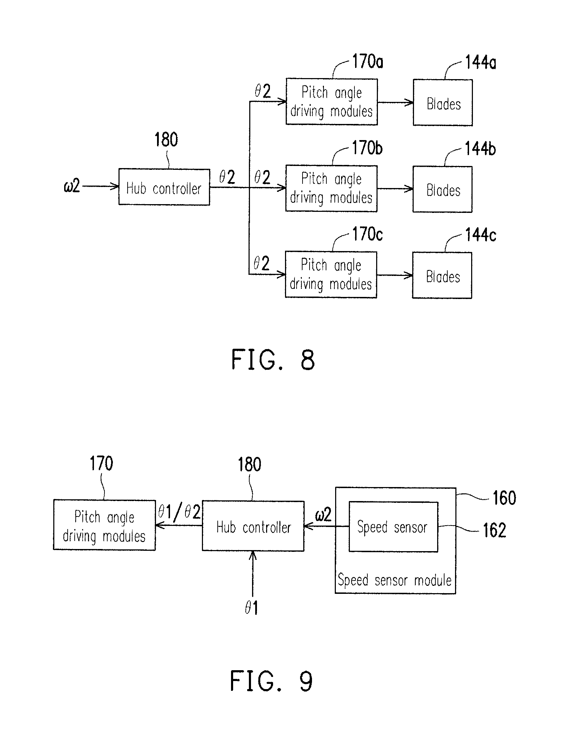

FIG. 8 is a schematic diagram of a transmission method of the second pitch command of the wind turbine system of FIG. 1. As described above, when the hub controller 180 determines that the first pitch command θ1 is incorrectly transmitted, the hub controller 180 receives the second speed signal ω2 from the speed sensor module 160 in the hub 142, and calculates the corresponding second pitch command θ2 through the inbuilt pitch control mechanism 182. The hub controller 180 transmits the second pitch command θ2 to each of the pitch angle driving modules 170 to respectively control the pitch angles of the corresponding blades 144. In the present embodiment, the pitch angle driving modules 170a-170c receive the second pitch command θ2 from the hub controller 180, and control the pitch angles of the corresponding blades 144a-144c.

A method for the speed sensor module 160 in the hub 142 sensing the rotation speed of the hub 142 is described below with reference of FIG. 9. FIG. 9 is a schematic diagram of the speed sensor module 160 in the hub 142 of the wind turbine system of FIG. 1. In the present embodiment, the speed sensor module 160 in the hub 142 includes a speed sensor 162, which is used for sensing the rotation speed of the hub 142 and outputting the second speed signal ω2 to the hub controller 180 to drive the pitch angle driving modules 170, where the speed sensor 162 can be a tachogenerator.

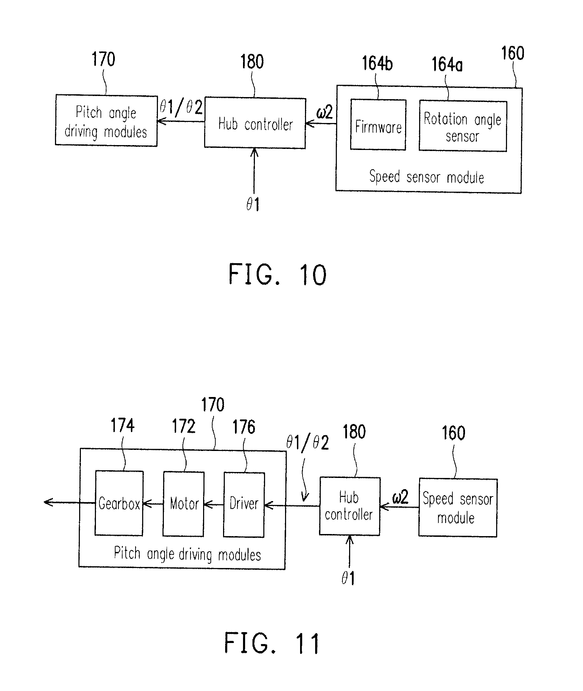

However, the speed sensor module 160 in the hub 142 can also sense the rotation speed of the hub 142 through another method, as that shown in FIG. 10. FIG. 10 is a schematic diagram of the speed sensor module 160 in the hub 142 of the wind turbine system according to another embodiment of the disclosure. In this embodiment, the speed sensor module 160 in the hub 142 may include a rotation angle sensor 164a and a firmware 164b, where the rotation angle sensor 164a can be a resolver or an encoder, which is capable of measuring a rotation angle variation amount and calculating a relative rotation speed, and the firmware 164b outputs the second speed signal ω2 to the hub controller 180 to drive the pitch angle driving modules 170.

When the hub controller 180 transmits the first pitch command θ1, or receives the second speed signal ω2 to output the second pitch command θ2, the hub controller 180 transmits the pitch command to each of the pitch angle driving modules 170. FIG. 11 is a schematic diagram of the pitch angle driving module of the wind turbine system of FIG. 1. Referring to FIG. 1 and FIG. 11, each of the pitch angle driving modules 170 includes a motor 172, a gearbox 174 and a driver 176. As described above, the hub controller 180 transmits the pitch command to each of the pitch angle driving modules 170. When the first pitch command θ1 is correctly transmitted, the hub controller 180 transmits the first pitch command θ1. Conversely, when the first pitch command θ1 is incorrectly transmitted, the hub controller 180 transmits the second pitch command θ2. In overall, the hub controller 180 transmits the first pitch command θ1 or the second pitch command θ2 to each of the pitch angle driving modules 170, and the driver 176 of each of the pitch angle driving modules 170 receives the pitch command from the hub controller 180 to drive the motor 172. The gearbox 174 is coupled between the motor 172 and the blade 144. In the present embodiment, the gearbox 174 can be a speed reduction gearbox, which is used to rotate the blade 144 to a predetermined angle.

In detail, a flow that the pitch angle driving modules 170 drive the pitch angles through signal transmission is as that shown in FIG. 7. After the first pitch command θ1 or the second pitch command θ2 is transmitted each of the pitch angle driving modules 170, a servomechanism in the pitch angle driving module 170 executes the first pitch command θ1 or the second pitch command θ2, such that an actual pitch angle of the blade follows the pitch command, and an error thereof can be quickly corrected by the servomechanism.

Each of the blades 144a-144c can be driven by the corresponding pitch angle driving modules 170a-170c to adjust the pitch angles thereof. After the blade 144 is driven to adjust the pitch angle, the pitch angle driving module 170 transmits back a measured value of the pitch angle to a gain scheduling control mechanism, and transmits back a proportional gain to the PI controller in the pitch control mechanism 182 to compensate for an existing non-linear aerodynamic characteristic. In this way, each of the pitch angle driving modules 170 can control the pitch angle of the corresponding blade 144.

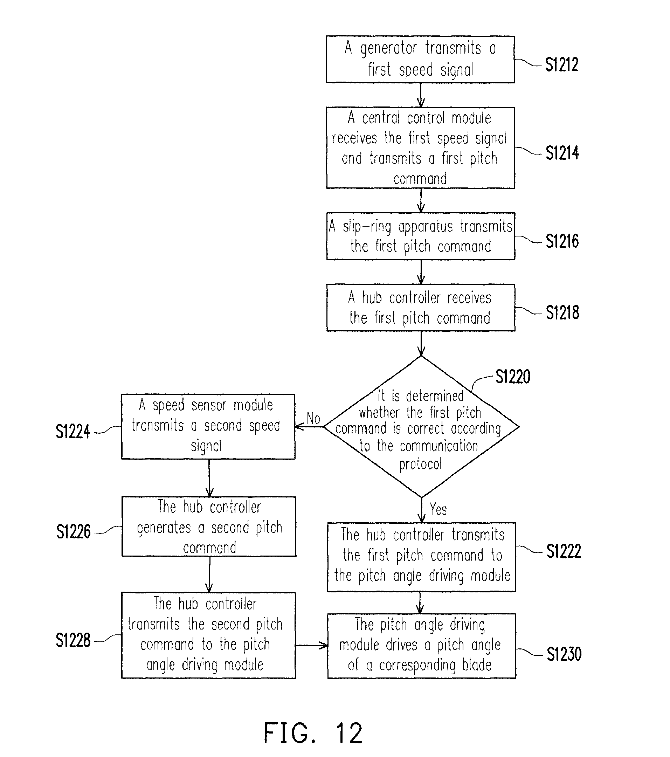

FIG. 12 illustrates a transmission flow of speed signals and pitch signals of the wind turbine system of FIG. 1. Referring to FIG. 12, in step S1212, the generator 120 transmits the first speed signal ω1. Then, in steps S1214-S1216, the central control module 130 calculates the first pitch command θ1 after receiving the first speed signal ω1, and transmits the first pitch command θ1 to the hub controller 180 through the slip-ring apparatus 190. Then, in step S1218, the hub controller 180 receives the first pitch command θ1, and in step S1220, the hub controller 180 determines whether the first pitch command θ1 is correctly transmitted according to the communication protocol, and if the first pitch command θ1 is correctly transmitted , in step S1222, the hub controller 180 transmits the first pitch command θ1 to each of the pitch angle driving modules 170. Then, in step S1230, the pitch angle driving modules 170 receive the first pitch command θ1 to respectively drive the pitch angles of the corresponding blades 144.

On the other hand, if it is determined that the first pitch command θ1 is incorrectly transmitted in the step S1220, a step S1224 is executed, by which the speed sensor module 160 in the hub 142 senses the rotation speed of the hub 142, and transmits the corresponding second speed signal ω2 to the hub controller 180. Then, in step S1226, the hub controller 180 calculates the corresponding second pitch command θ2 according to the second speed signal ω2, and in step S1228, the hub controller 180 transmits the second pitch command θ2 to each of the pitch angle driving modules 170. Finally, in step S1230, the pitch angle driving modules 170 receive the second pitch command θ2 to respectively drive the pitch angles of the corresponding blades 144.

Therefore, in a normal state, the central control module 130 of the wind turbine system 100 receives the first speed signal ω1 from the generator 120 and outputs the first pitch command θ1 to the hub controller 180, and the hub controller 180 transmits the first pitch command θ1 to each of the pitch angle driving modules 170, so as to drive the pitch angles of the corresponding blades 144, such that the wind turbine system 100 can normally operate.

Comparatively, when the first pitch command θ1 cannot be transmitted to the hub controller 180, the wind turbine system 100 cannot normally operate. Therefore, the speed sensor module 160 in the hub 142 senses the rotation speed of the hub 142 and transmits the corresponding second speed signal ω2 to the hub controller 180. The hub controller 180 calculates the corresponding second pitch command θ2 according to the second speed signal ω2, and transmits the second pitch command θ2 to each of the pitch angle driving modules 170 to respectively drive the pitch angles of the corresponding blades 144, such that the wind turbine system 100 can normally operate.

Therefore, the hub controller 180 has an independent operation capability, and the wind turbine system 100 has the redundancy capability. Namely, in a normal case, the wind turbine system 100 drive each of the pitch angle driving modules 170 to control the pitch angles of the corresponding blades 144 through the first pitch command θ1, and in case that the first pitch command θ1 is incorrectly transmitted, the wind turbine system 100 can also drive each of the pitch angle driving modules 170 to control the pitch angles of the corresponding blades 144 through the second pitch command θ2, such that the wind turbine system 100 can normally operate.

In summary, the disclosure provides a wind turning system, in which the speed sensor module is configured on the hub to sense the rotation speed of the hub, and the pitch control mechanism is embedded in the hub controller, which is used for calculating the corresponding pitch command when the speed sensor module in the hub transmits the speed signal to the hub controller. Therefore, in the wind turbine system of the disclosure, the hub controller has the independent operation capability, which can automatically generate the pitch command with assistance of the speed sensor module, so that a situation that the pitch angles of the blades are out of control to caused an operation failure of the wind turbine system due to that the pitch command output by the central control module cannot be transmitted is avoided. Moreover, regardless of receiving the pitch command of the central control module or the hub controller generates the pitch command by itself, the hub controller can transmit a pitch command to each of the pitch angle driving modules to control the pitch angles of the blades, so that the wind turbine system has the distributed control function and the redundancy capability.

## Claims

1. A wind turbine system, comprising:
a nacelle (110);
a generator (120), disposed in the nacelle (110);
a central control module (130), disposed in the nacelle (110), receiving a first speed signal (ω1) of the generator (120), and outputting a corresponding first pitch command (θ1);
an impeller (140), having a hub (142) and at least one blade (144) connected to the hub (142);
a transmission module (150), connected between the generator (120) and the impeller (140);
a speed sensor module (160) disposed in the hub (142), sensing a rotation speed of the hub (142), and outputting a corresponding second speed signal (ω2);
at least one pitch angle driving module (170), wherein each blade (144) is connected to one or plural of the at least one pitch angle driving module (170); and
a hub controller (180), disposed in the hub (142), and coupled to the speed sensor module (160) and the pitch angle driving module (170), the hub controller (180) being adapted to receive the first pitch command (θ1) and determine whether the first pitch command (θ1) is correctly transmitted, wherein when the first pitch command (θ1) is correctly transmitted, the hub controller (180) transmits the first pitch command to (θ1) the pitch angle driving module (170) for the pitch angle driving module (170) to control a pitch angle of the at least one blade (144), and when the first pitch command (θ1) is incorrectly transmitted, the hub controller (180) calculates a second pitch command (θ2) according to the second speed signal (ω2) and transmits the second pitch command (θ2) to the pitch angle driving module (170), and the pitch angle driving module (170) controls the pitch angle of the at least one blade (144).

2. The wind turbine system as claimed in claim 1, wherein the central control module (130) comprises:
a central controller (132); and
a power converter (134), coupled between the generator (120) and the central controller (132).

3. The wind turbine system as claimed in claim 1, wherein the transmission module (150) comprises a gearbox.

4. The wind turbine system as claimed in claim 1, further comprising a slip-ring apparatus (190) connected to the central control module (130) and the hub controller (180) for transmitting the first pitch command (θ1) to the hub controller (180).

5. The wind turbine system as claimed in claim 1, wherein the pitch angle driving module (170) comprises:
a motor (172);
a gearbox (174), coupled between the motor (172) and the at least one blade (144); and
a driver (176), adapted to receive the first pitch command (θ1) or the second pitch command (θ2) for driving the motor (172) to control the pitch angle of the at least one blade (144) through the gearbox (174).

6. The wind turbine system as claimed in claim 1, wherein the speed sensor module (160) comprises a speed sensor (162).

7. The wind turbine system as claimed in claim 6, wherein the speed sensor (162) comprises a tachogenerator.

8. The wind turbine system as claimed in claim 1, wherein the speed sensor module (160) comprises:
a rotation angle sensor (164a); and
a firmware (164b), outputting the second speed signal (ω2) in collaboration with the rotation angle sensor (164a).

9. The wind turbine system as claimed in claim 8, wherein the rotation angle sensor (164a) comprises a resolver or an encoder.
